# EUROPEAN PATENT SPECIFICATION

(11) **EP 1 496 648 B1**
(45) Date of publication and mention of the grant of the patent: **30.05.2007**
(21) Application number: 03015779.6
(22) Date of filing: 10.07.2003
(51) Int. Cl.: H04L 12/26

(54) **Cost effective traffic generators for a complex IP network**
Kostengünstige Verkehrsgeneratoreinrichtungen für ein komplexes IP Netzwerk
Générateurs de trafic économiquement rentables pour un réseau IP complexe

(43) Date of publication of application: 12.01.2005
(73) Proprietor: SIEMENS AKTIENGESELLSCHAFT, 80333 München (DE)
(72) Inventor: Geilfus, Dirk, 81476 München (DE); Schwank, Klaus-Peter, 82152 Martinsried (DE); Seifert, Joachim, 81827 München (DE); Vierthaler, Richard, 80687 München (DE)

(56) References cited:
- US-A- 5 937 165
- US-A- 6 075 773
- US-A1- 2003 012 141
- US-B1- 6 282 678

## Description

In recent years, IP networks have evolved into more complex systems. For this reason, there has been increased necessity of evaluating whether the resources are effectively utilized.

When carrying out the design and analysis of a network, it would be most effective to transmit the traffic which is actually sent onto the network as an object of evaluation in order for effective measurement and analysis. However, it is difficult in terms of cost if the actual traffic is employed and, for that matter, it is difficult to carry out quantitative analysis in an actual environment.

For this reason, there has been employed a traffic generator for generating pseudo-traffic for testing. A traffic generator sends pseudo-traffic to a packet-switched network to evaluate the network performance.

In testing an IP network, such as IP router tests, devices are needed which define the IP traffic load to be input into the IP network. For cost effectiveness, it has been proposed to employ PC-based solutions. With the PC solution, open source software could be utilized instead of relying on particular piece meal products. Network performance testing equipment and the like, therefore, do not need to be specially installed.

Problematically, in order to cover complex Networks, one needs more and more traffic input generators. An underlying traffic matrix could plan for the additional complexity, for example, where several traffic generators are to send IP traffic to a common target.

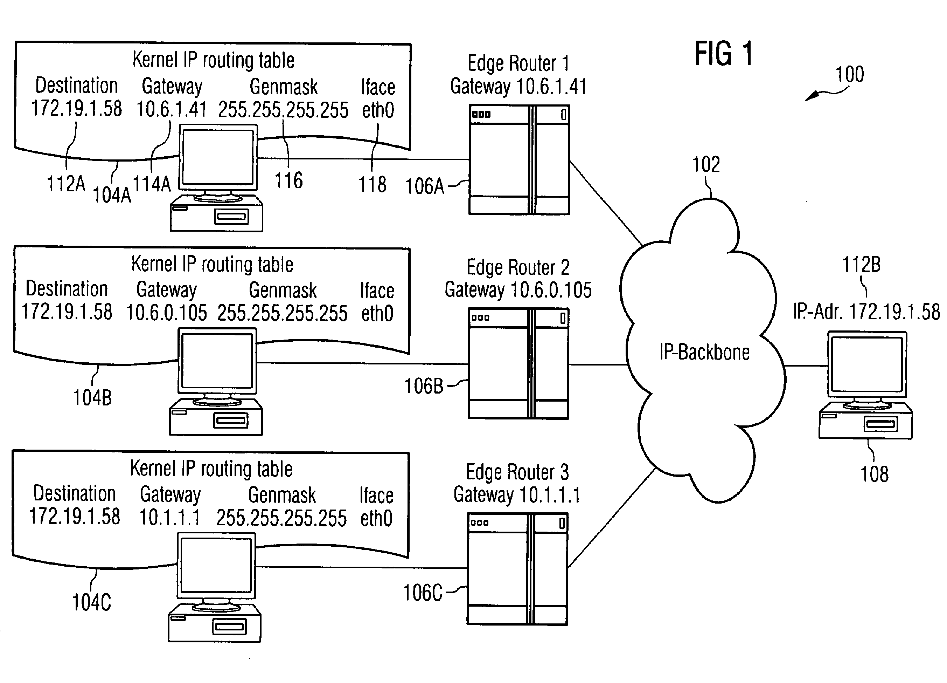

However, as will be understood from an explanation of the complex IP network 100 shown in Fig. 1, a number of problems hereby arise. In the figure, there is shown an IP Backbone 102 which serves as a top level, employing high-speed data transmission and serving as a major access point for smaller networks that connect thereto.

US2003012141 backround art document discloses an apparatus for testing network equipment capable of sending different packet template profiles to corresponding source/destination addresses.

When it is desired that the traffic generator is to be PC (personal computer) based, as a primary consideration for cost effectiveness, then each realization of a traffic generator requires its own PC base, as shown by reference numerals 104A-C. This is due in part because each traffic generator is logically seen to include the connection to the corresponding edge router 106A-C through which the traffic is routed to the IP backbone 102. This is because the edge router 106A serving as a gateway address edge router includes the network map A. Using the network map A, the edge router A routes the traffic through the IP backbone 102 to the intended target 108, shown here as a PC.

When it is intended to send test traffic to the target, the PC Base 104A-C accesses its respective kernel IP routing table 110. Amongst other things, the kernel IP routing table 110 includes the IP destination address 112a which indicates the IP address 112b which is also stored in the target 108. In the example shown, the IP address of the target 112a is 172.19.1.58. The kernel IP routing table 110 also includes the edge router gateway IP address 114a, which is also stored in the respective edge router as indicated by the reference numeral 114b. Here it is shown that the edge router gateway

IP address 114a is 10.6.1.41, for example. In addition, a mask 116 is indicated in the kernel IP routing table, for example, 255.255.255.255. Further, an interface name 116, here eth0, is indicated by the kernel IP routing table 110.

When, for example, it is desired to send traffic to the target, the PC base 104A determines the IP destination address 112a of the target 108 from the kernel IP routing table 110. Then, the PC base 104A generates the traffic data and transmits the same to the corresponding edge router 106A indicated by the edge router gateway IP address 114A. Using this information and the network map A, in the example, the edge router 106A routes the traffic to the correct target 108.

Problematically, the PC base 104A, which realizes the traffic generator, is not able to distinguish via which generator it has to send the traffic to the target 108 because for all generators A-C it is one and the same target. Therefore, only one traffic generator per PC is realizable with the arrangement in Fig. 1. In other words, and as shown in the figure, a plurality of PCs 104A-C are required to test the complex IP network 100.

An object of the present invention is to provide testing of a complex IP network.
An object of the present invention is to provide a traffic generator.
An object of the present invention is to provide a cost effective traffic generator.
An object of the present invention is to provide several traffic generators per PC.

In summary, the foregoing objectives are realized by a personal computer (PC) based traffic generator that generates test traffic to be transmitted through an internet protocol (IP) network to a target. A PC including a plurality of traffic generators generates test traffic to be transmitted through the IP network to a plurality of targets coupled to the IP network. The PC includes a routing table including IP addresses of the plurality of targets, wherein the traffic generators generate the test traffic in accordance with the IP addresses in the routing table.

The invention also provides a method for generating personal computer (PC) based test traffic to be transmitted through an internet protocol (IP) network to a target. The method calls for generating test traffic in the same PC for a plurality of targets coupled to the IP network and sending the test traffic through the IP network to the associated target.

These and other objectives shall be better understood from the more detailed description of the drawings in which one or more embodiments of the invention are are shown by way of the

### examples:

Fig. 1 is a block diagram of an IP network;
Fig. 2 is a block diagram of an IP network of the present invention; and
Fig. 3 is a flow diagram of the present invention.

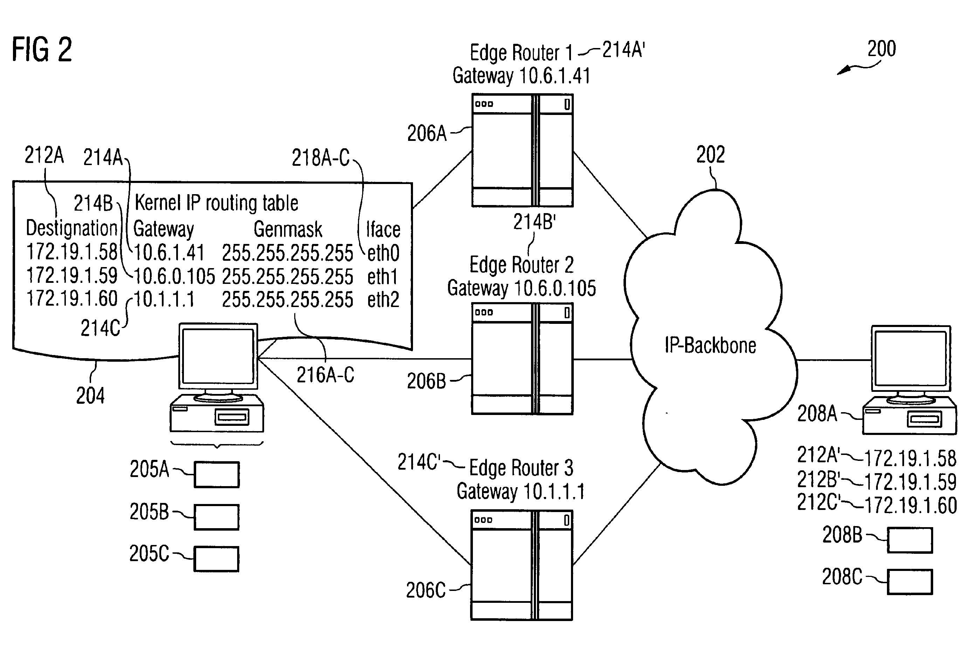

Now with reference to Fig. 2, the present invention shall now be explained. In the complex IP network 200 shown, there is coupled a PC traffic generator 204 including a plurality of traffic generators 205A-C whose objective is to generate and transmit test traffic through the appropriate edge router 206A-C to a master IP address target 208A in a sub-network 209. The traffic generators 205A-C may be logical elements although they are shown in the figure as comprising discrete devices. In turn, the master IP address target 208A reroutes the traffic to a sub-target 208 B-C.

The solution of the problem takes place via virtual duplication of the actual target. In more detail, the invention redefines the kernel IP routing table 210 of the same traffic generator 204 to include the IP destination address 212 A-C of each of the targets and the corresponding edge router gateway IP address 214 A-C, as well as the mask 216 A-C and interface name 218A-C for each target.

In the invention, as shown in the figure, the target 208A includes, besides its actual IP address, the IP address(es) of another, a plurality, or all of the other sub-targets 208 B-C. These addresses can be assigned using, for example, a LINUX system by means of the known IP alias technology. Today's PCs (CPU capability) are in the position to carry more than one traffic generator and, therefore, the present invention should be able to be implemented by those skilled in the art.

To continue, the IP addresses are stored according to the invention in the same IP sub network as the actual 'master IP address ' of the host. Then, from the view of the Network, it doesn't matter which address from the same sub network 209 it uses to reach the target. Because the actual target from several ' sub targets ' is generated by the invention (host mask 255.255.255.255), its own routing entry can be provided for each of these sub targets in the traffic generator PC, as shown in the figure. When traffic is sent by the traffic generator 204 to the target 208A, a routing entry in the PC particularly for the network map A is administered. The target sub address A is attainable via the routing/gateway address A and network card A (shown generally as the PC in the figure).

The invention provides a routing table 220 in the same target PC 208A that includes the IP address of the sub targets 208B-C in the sub-network 209. The target PC 208A, having a master IP Address, receives the test traffic and forwards the same to the corresponding sub target 208B-C according to the IP address received and that of the sub target indicated by the routing table 220.

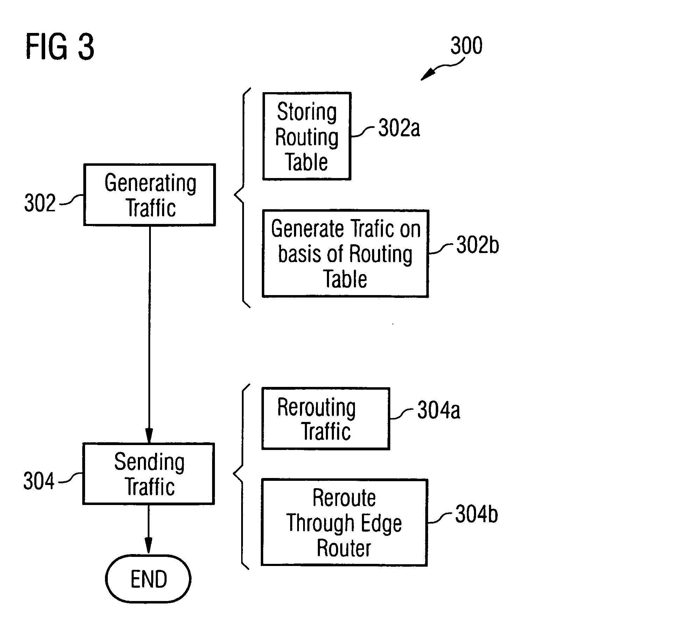

Fig. 3 illustrates the process of the present invention. The method 300 generates personal computer (PC) based test traffic to be transmitted through an internet protocol (IP) network to a target. In step 302, test traffic is generated in the same PC for a plurality of targets coupled to the IP network. In step 304, the test traffic is sent, or transmitted, through the IP network to the associated target. The step 302, may comprise sub steps, including the step 302a of storing a routing table including the IP addresses of the plurality of targets to which associated test traffic is to be sent and/or the step 302b of generating the test traffic on the basis of the IP addresses of the plurality of targets stored in the routing table. The step 304 of sending may include the sub step 304a of rerouting the test traffic from the target to a sub target in a sub network coupled to the IP network on the basis of the IP address of the test traffic and/or the step 304b of routing the test traffic through a plurality of edge routers associated with the IP network.

With this solution, therefore, several traffic generators per PC are realizable, whereby this solution is a factor more economical than a solution with only one generator per PC. In principle, there can be as many traffic generators as network connections in the respective PC, depending of course on the CPU capability of the PC. The solution provided by the present invention, therefore, is a factor more economical than a solution with only one traffic generator per PC.

## Claims

1. An apparatus for a personal computer, PC, (204) based traffic generator for generating test traffic to be transmitted through an internet protocol, IP, network (200) to a target (208A), comprising:
a PC (204) including a plurality of traffic generators (205A-C) for generating test traffic to be transmitted through the IP network (200) to a plurality of targets (208A-C) coupled to the IP network (200),
a routing table (210) stored in said PC including IP addresses (212A-C) of the plurality of targets (208A-C), wherein the traffic generators (205A-C) are adapted to generate the test traffic in accordance with the IP addresses (212A-C) in the routing table (210)
wherein the target (208A) includes a plurality of sub-target addresses (212B'-C'),
each target including a list comprised of its actual IP address and all other sub-targets (208c),
wherein the target (208A) re-routes the test traffic received to the corresponding sub-target (208B-C) indicated by the IP address (212B-C) of the test traffic.

2. The apparatus according to claim 1, further comprising a plurality of edge routers (206A-C) for routing the test traffic through the IP network (200) based on the IP address (212A-C) associated with the test traffic.

3. The apparatus according to claim 2, wherein the PC (204) routes the test traffic through a plurality of the edge routers (206A-C).

4. The apparatus according to claim 1, wherein the target (208A) includes a routing table (211) that stores the addresses of the sub-targets (208B-C).

5. A method (300) for generating personal computer, PC, based test traffic to be transmitted through an internet protocol, IP, network to a target, comprising the steps of:
(302) generating test traffic in the same PC for an associated target from among a plurality of targets coupled to the IP network,
(304) sending the test traffic through the IP network to the associated target,
wherein the target (208A) includes a plurality of sub-target addresses (212B'-C'),
each target including a list comprised of its actual IP address and all other sub-targets (208c), and
rerouting the test traffic from the target to a sub target in a sub network coupled to the IP network on the basis of the IP address of the test traffic..

6. The method according to claim 5, wherein the step of generating (302) further comprises the step (302a) of storing a routing table including the IP addresses of the plurality of targets to which associated test traffic is to be sent.

7. The method according to claim 6, wherein the step of generating (302) further comprises (302b) generating the test traffic on the basis of the IP addresses of the plurality of targets stored in the routing table.

8. The method according to claim 5, further comprising the step (304b) of routing the test traffic through a plurality of edge routers associated with the IP network.

## Patentansprüche

1. Vorrichtung für einen auf einen Personal Computer, PC, (204) gestützten Verkehrsgenerator zur Erzeugung von Testverkehr zur Übertragung über ein Internetprotokoll-Netzwerk (IP-Netzwerk) (200) an ein Ziel (208A), wobei die Vorrichtung Folgendes umfasst:
einen PC (204) mit einer Vielzahl von Verkehrsgeneratoren (205A-C) zur Erzeugung von Testverkehr zur Übertragung über das IP-Netzwerk (200) an eine Vielzahl von Zielen (208A-C), die mit dem IP-Netzwerk (200) verbunden sind,
eine in dem PC gespeicherte Routing-Tabelle (210) mit IP-Adressen (212A-C) der Vielzahl von Zielen (208A-C), wobei die Verkehrsgeneratoren (205A-C) darauf ausgelegt sind, den Testverkehr gemäß den IP-Adressen (212A-C) in der Routing-Tabelle (210) zu erzeugen,
wobei das Ziel (208A) eine Vielzahl von Unterzieladressen (212B'-C') umfasst,
wobei jedes Ziel eine Liste enthält, die ihre eigene IP-Adresse und alle anderen Unterziele (208C) enthält,
wobei das Ziel (208A) den empfangenen Testverkehr an das entsprechende Unterziel (208B-C) umleitet, wie anhand der IP-Adresse (212B-C) des Testverkehrs bezeichnet.

2. Vorrichtung nach Anspruch 1, die zudem eine Vielzahl von Edge-Routern (206A-C) zur Weiterleitung des Testverkehrs über das IP-Netzwerk (200) anhand der dem Testverkehr zugeordneten IP-Adresse (212A-C).

3. Vorrichtung nach Anspruch 2, wobei der PC (204) den Testverkehr über eine Vielzahl von Edge-Routern (206A-C) weiterleitet.

4. Vorrichtung nach Anspruch 1, wobei das Ziel (208A) eine Routing-Tabelle (211) umfasst, in der die Adressen der Unterziele (208B-C) gespeichert sind.

5. Verfahren (300) zur Erzeugung eines auf einen Personal Computer (PC) gestützten Testverkehrs zur Übertragung über ein Internetprotokoll-Netzwerk (IP-Netzwerk) an ein Ziel, wobei das Verfahren folgende Schritte beinhaltet:
(302) Erzeugen von Testverkehr in demselben PC für ein zugeordnetes Ziel aus einer Vielzahl von Zielen, die mit dem IP-Netzwerk verbunden sind,
(304) Senden des Testverkehrs über das IP-Netzwerk an das zugeordnete Ziel,
wobei jedes Ziel (208A) eine Vielzahl von Unterzieladressen (212B'-C') umfasst,
wobei jedes Ziel eine Liste enthält, die ihre eigene IP-Adresse und alle anderen Unterziele (208C) umfasst,
Umleiten des Testverkehrs von dem Ziel an ein Unterziel in einem an das IP-Netzwerk gekoppelte Unternetzwerk auf der Grundlage der IP-Adresse des Testverkehrs.

6. Verfahren nach Anspruch 5, wobei der Schritt des Erzeugens (302) zudem den Schritt (302a) des Speichers einer Routing-Tabelle mit den IP-Adressen der Vielzahl von Zielen umfasst, an die der Testverkehr zu senden ist.

7. Verfahren nach Anspruch 6, wobei der Schritt des Erzeugens (302) zudem das Erzeugen (302b) des Testverkehrs auf der Grundlage der IP-Adressen der Vielzahl von Zielen umfasst, die in der Routing-Tabelle gespeichert sind.

8. Verfahren nach Anspruch 5, das zudem den Schritt (304b) des Weiterleitens des Testverkehrs durch eine Vielzahl von Edge-Routern umfasst, die dem IP-Netzwerk zugeordnet sind.

## Revendications

1. Dispositif pour un générateur de trafic basé sur un ordinateur personnel, PC, (204) pour générer un trafic d'essai à transmettre à travers un réseau à protocole Internet, IP, (200) à une cible (208A), comprenant :
un PC (204) comprenant une pluralité de générateurs de trafic (205A-C) pour générer un trafic d'essai à transmettre à travers le réseau IP (200) à une pluralité de cibles (208A-C) couplées au réseau IP (200),
une table de routage (210) stockée dans ledit PC comprenant les adresses IP (212A-C) de la pluralité de cibles (208A-C), dans lequel les générateurs de trafic (205A-C) sont conçus pour générer le trafic d'essai selon les adresses IP (212A-C) dans la table de routage (210),
dans lequel la cible (208A) comprend une pluralité d'adresses de sous-cibles (212B'-C'),
chaque cible comprenant une liste composée de son adresse IP réelle et de toutes les autres sous-cibles (208c),
dans lequel la cible (208A) réachemine le trafic d'essai reçu à la sous-cible correspondante (208B-C), indiquée par l'adresse IP (212B-C) du trafic d'essai.

2. Dispositif selon la revendication 1, comprenant en outre une pluralité de routeurs de périphérie (206A-C) pour acheminer le trafic d'essai à travers le réseau IP (200) en se basant sur l'adresse IP (212A-C) associée au trafic d'essai.

3. Dispositif selon la revendication 2, dans lequel le PC (204) achemine le trafic d'essai à travers une pluralité de routeurs de périphérie (206A-C).

4. Dispositif selon la revendication 1, dans lequel la cible (208A) comprend une table de routage (211) qui stocke les adresses des sous-cibles (210B-C).

5. Procédé (300) pour générer un trafic d'essai basé sur un ordinateur personnel, PC, à transmettre à travers un réseau à protocole Internet, IP, à une cible, comprenant les étapes de :
(302) générer un trafic d'essai dans le même PC pour une cible associée à partir d'une pluralité de cibles couplées au réseau IP,
(304) envoyer le trafic d'essai à travers le réseau IP à la cible associée,
dans lequel la cible (208A) comprend une pluralité d'adresses de sous-cibles (212B'-C'),
chaque cible comprenant une liste composée de son adresse IP réelle et de toutes les autres sous-cibles (208c), et
réacheminer le trafic d'essai de la cible à une sous-cible dans un sous-réseau couplé au réseau IP sur la base de l'adresse IP du trafic d'essai.

6. Procédé selon la revendication 5, dans lequel l'étape de génération (302) comprend en outre l'étape (302a) de stocker une table de routage comprenant les adresses IP de la pluralité de cibles auxquelles le trafic d'essai associé doit être envoyé.

7. Procédé selon la revendication 6, dans lequel l'étape de génération (302) comprend en outre l'étape (302b) de générer le trafic d'essai sur la base des adresses IP de la pluralité de cibles stockées dans la table de routage.

8. Procédé selon la revendication 5, comprenant en outre l'étape (304b) d'acheminer le trafic d'essai à travers une pluralité de routeurs de périphérie associés au réseau IP.
